# EUROPEAN PATENT APPLICATION

(11) **EP 4 717 912 A1**
(43) Date of publication of application: **01.04.2026**
(21) Application number: 25205025.7
(22) Date of filing: 26.09.2025
(51) Int. Cl.: F03D 80/50

(54) **SYSTEM AND METHOD FOR IMPROVING WIND TURBINE ROTOR BLADE QUALITY USING ARTIFICIAL INTELLIGENCE**

(30) Priority: 27.09.2024 IN 202441073050
(71) Applicant: GE Vernova Infrastructure Technology LLC, Greenville, SC 29615 (US)
(72) Inventor: Ramaswamy, Sivaramanivas, 560 066 Bangalore (IN); Meyer, Pascal, Niskayuna, NY 12309 (US); Jain, Arpit, 560 066 Bangalore (IN); Murali, Sabharish, 560 066 Bangalore (IN)
(74) Representative: Zimmermann & Partner Patentanwälte mbB

(57) **Abstract**

A method for improving quality of a rotor blade of a wind turbine includes collecting, via a controller, data relating to the rotor blade during or after manufacturing of the rotor blade before the rotor blade is placed into operation on the wind turbine. The data includes visual data and multi-spectral infrared (IR) data. The method also includes fusing, via the controller, image data from the visual data and the multi-spectral IR data to determine an occurrence of one or more anomalies on or within the rotor blade. Further, the method includes automatically generating, via the controller, a quality report of the rotor blade comprising the one or more anomalies. Moreover, the method includes implementing, via the controller, a corrective action for the rotor blade or a subsequent manufacturing process of another rotor blade based on the quality report.

## Description

### FIELD

The present disclosure generally relates to wind turbines, and more particularly, to automated systems and methods for improving wind turbine rotor blade quality using artificial intelligence.

### BACKGROUND

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is typically geared to a generator for producing electricity.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves.

The spar caps are typically constructed of various materials, including but not limited to glass fiber laminate composites and/or carbon fiber laminate composites. The shell of the rotor blade is generally built around the spar caps of the blade by stacking layers of fiber fabrics in a shell mold. The layers are then typically infused together to form the rotor blade. Accordingly, some rotor blades generally have a sandwich panel configuration. Still other rotor blades are formed via a plurality of blade segments.

Existing methods for providing quality control to manufactured rotor blades are manually driven processes that generally involve non-standardized processes. Therefore, such methods are often inconsistent, time-consuming, and error prone. Accordingly, the present disclosure is directed to providing automated systems and methods of improving wind turbine rotor blade quality using artificial intelligence to ensure the resulting rotor blades satisfy a certain quality standard.

### BRIEF DESCRIPTION

Aspects and advantages of the invention will be set forth in part in the following description, or may be obvious from the description, or may be learned through practice of the invention.

In an aspect, the present disclosure is directed to a method according to claim 1 for improving quality of a rotor blade of a wind turbine. The method includes collecting, via a controller, data relating to the rotor blade during or after manufacturing of the rotor blade before the rotor blade is placed into operation on the wind turbine. The data includes visual data and multi-spectral infrared (IR) data. The method also includes fusing, via the controller, image data from the visual data and the multi-spectral IR data to determine an occurrence of one or more anomalies on or within the rotor blade. Further, the method includes automatically generating, via the controller, a quality report of the rotor blade comprising the one or more anomalies. Moreover, the method includes implementing, via the controller, a corrective action for the rotor blade or a subsequent manufacturing process of another rotor blade based on the quality report.

In another aspect, the present disclosure is directed to a system according the independent system claim for improving quality of a rotor blade of a wind turbine. The system includes a controller having at least one processor configured to receive data relating to the rotor blade. The data relating to the rotor blade is collected during or after manufacturing of the rotor blade before the rotor blade is placed into operation on the wind turbine. The data includes visual data and multi-spectral infrared (IR) data. The processor(s) is configured to perform a plurality of operations, including but not limited to fusing image data from the visual data and the multi-spectral IR data to determine an occurrence of one or more anomalies on or within the rotor blade; automatically generating a quality report of the rotor blade comprising the one or more anomalies; and implementing a corrective action for the rotor blade or a subsequent manufacturing process of another rotor blade based on the quality report.

In typical systems as described herein, the plurality of operations further comprise operating an intelligent vehicle across a surface of the rotor blade to collect the data relating to the rotor blade, the intelligent vehicle comprising a camera and an IR source.

In typical systems as described herein, the NIR data comprises multiple frames of two-dimensional (2D) NIR image data and the thermal IR data comprises two-dimensional (2D) thermal IR data, and wherein fusing the image data from the visual data and the multi-spectral IR data to determine the occurrence of one or more anomalies on or within the rotor blade further comprises fusing the 2D NIR data and the visual data using one or more machine-learned models.

In typical systems as described herein, fusing the image data from the visual data and the multi-spectral IR data to determine the occurrence of one or more anomalies on or within the rotor blade further comprises: extracting 2D wavelet-based features from the 2D NIR image data, the 2D wavelet-based features comprising at least one of a maximum, a minimum, or a mean of approximation coefficients and details coefficients of wavelet decomposition of the 2D NIR image data and the visual data; and utilizing the 2D wavelet-based features to fuse images from the 2D NIR image data and the visual data.

In typical systems as described herein, fusing the image data from the visual data and the multi-spectral IR data to determine the occurrence of one or more anomalies on or within the rotor blade further comprises: identifying one or more thermal features in the 2D thermal IR data, the one or more thermal features comprising at least one of a rate of thermal diffusion or a cooling rate; determining an amplitude spectrum and a phase spectrum of the 2D thermal IR data; and fusing the one or more thermal features, the amplitude spectrum, and the phase spectrum of the 2D thermal IR data with the 2D NIR image data and the visual data, thereby enabling enhanced sensitivity to deeper anomalies.

In typical systems as described herein, implementing the corrective action for the rotor blade or the subsequent manufacturing process of another rotor blade based on the quality report further comprises providing closed-loop feedback to an overlaminate repair process to modify one or more resin flow parameters based on the multi-spectral data, storing the quality report in a database, scheduling a repair to correct the one or more anomalies, modifying a manufacturing parameter, or halting production of subsequent rotor blades until the one or more anomalies are corrected.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a schematic diagram of an embodiment of a wind farm according to the present disclosure;
FIG. 3 illustrates a schematic diagram of an embodiment of a controller for a wind turbine or a wind farm according to the present disclosure;
FIG. 4 illustrates a flow diagram of an embodiment of a method for improving quality of a rotor blade of a wind turbine according to the present disclosure;
FIG. 5 illustrates a perspective view of an embodiment of an intelligent vehicle collecting data relating to a rotor blade by scanning a surface thereof according to the present disclosure;
FIG. 6 illustrates a perspective view of an embodiment of various anomalies on a surface of a rotor blade as scanned by an intelligent vehicle according to the present disclosure; and
FIG. 7 illustrates example image data from a rotor blade generated by systems and methods of the present disclosure, particularly illustrating a rotor blade having different anomalies.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In the following specification and the claims, reference will be made to a number of terms, which shall be defined to have the following meanings.

The singular forms "a", "an", and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

In general, the present disclosure is directed to systems and methods for improving wind turbine rotor blade quality using artificial intelligence (AI) and/or intelligent machines. More specifically, in an embodiment, the present disclosure is directed to systems and methods that address challenges of vision-based systems used to detect anomalies that are sub-surface or deeper into a part, such as a recently manufactured wind turbine rotor blade. Thus, in an embodiment, systems and methods of the present disclosure include using multi-spectral data, e.g., from 840 -1000 nm (near-infrared, NIR), along with visual data, and 2.5 - 7.5-micron wavelength infrared data to detect anomalies.

In particular embodiments, for example, a NIR wave, e.g., at 1 to 5 Milliwatt (mW) power and generated by an IR source, can be used to illuminate the part. Reflected waves in this spectrum are recorded to generate a two-dimensional (2D) image in the field-of-view of a camera, e.g., mounted to an intelligent vehicle moving along a surface of and scanning the part. In addition, a short thermal pulse (e.g., lasting from about 100 milliseconds (ms) to about 500 ms) from a halogen source or a light-emitting diode can be used to illuminate the part. A temperature difference caused by internal anomalies can be recorded as a 2D image. Thus, in an embodiment, 2D NIR image data can be used to detect anomalies. For example, multiple frames of the NIR data can be acquired as the camera and infrared source are used to scan the part. In particular embodiments, a change detection algorithm operating on the NIR data can be used to estimate the probability of occurrence of anomalies. In another embodiment, 2D NIR image data is combined with the visual data to detect anomalies. In further embodiments, 2D wavelet-based features can be extracted (such as a maximum, a minimum, and mean) to fuse the images. In another embodiment, 2D NIR data and the visual data is combined with thermal IR 2D data to localize the anomalies. In still further embodiments, thermal features such as rate of thermal diffusion or cooling rates that are identified from multiple frames of thermal IR data, amplitude spectrum, and/or phase spectrum of the 2D IR data can be used to fuse with the NIR data and the visual data, thereby enabling enhanced sensitivity to deeper anomalies.

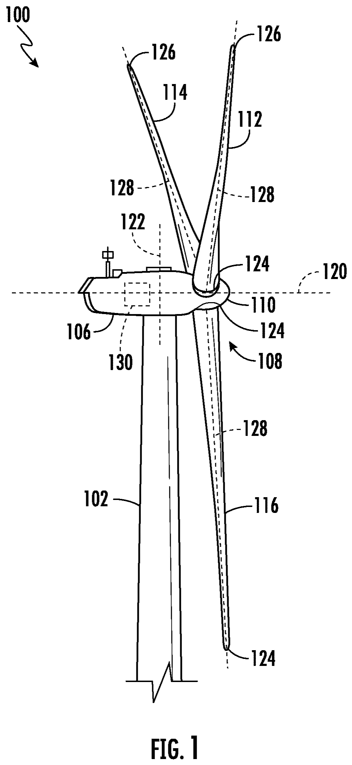

Referring now to FIG. 1, a schematic perspective view of a wind turbine 100 according to the present disclosure is illustrated. As shown in the exemplary embodiment, the wind turbine 100 is a horizontal axis wind turbine. Further, as shown, the wind turbine 100 includes a tower 102 extending from a supporting surface (not shown), a nacelle 106 coupled to tower 102, and a rotor 108 coupled to nacelle 106. Moreover, as shown, the rotor 108 has a rotatable hub 110 and a plurality of blades 112, 114, 116 coupled to rotatable hub 110. In the illustrated embodiment, the rotor 108 has a first blade 112, a second blade 114, and a third blade 116. In alternative embodiments, the rotor 108 may have any number of blades 112, 114, 116 that enables the wind turbine 100 to function as described herein.

In certain embodiments, the tower 102 may be fabricated from tubular steel or any other suitable material that enables the wind turbine 100 to operate as described herein. For example, in some embodiments, the tower 102 is any one of a lattice steel tower, guyed tower, concrete tower, and/or hybrid tower.

Still referring to FIG. 1, as shown, the blades 112, 114, 116 are positioned about the rotatable hub 110 to facilitate rotating the rotor 108 when wind flows through the wind turbine 100. Thus, when the rotor 108 rotates, kinetic energy from the wind is transferred into usable mechanical energy, and subsequently, electrical energy. During operation, the rotor 108 rotates about a rotation axis 120 that is substantially parallel to the supporting surface. In addition, in some embodiments, the rotor 108 and the nacelle 106 are rotated about the tower 102 on a yaw axis 122 to control the orientation of the blades 112, 114, 116 with respect to the direction of wind. In alternative embodiments, the wind turbine 100 includes any rotor 108 that enables the wind turbine 100 to operate as described herein.

In particular embodiments, as shown, each blade 112, 114, 116 is coupled to the rotatable hub 110 at a hub end 124 and extends radially outward from rotatable hub 110 to a distal end 126. Each blade 112, 114, 116 defines a longitudinal axis 128 extending between hub end 124 and distal end 126. In alternative embodiments, the wind turbine 100 includes any blade 112, 114, 116 that enables wind turbine 100 to operate as described herein.

The wind turbine 100 may also include a wind turbine controller 130 centralized within the nacelle 106. However, in other embodiments, the controller 130 may be located within any other component of the wind turbine 100 or at a location outside the wind turbine 100. Further, the controller 130 may be communicatively coupled to any number of the components of the wind turbine 100 in order to control the operation of such components and/or implement a corrective or control action. As such, the controller 130 may include a computer or other suitable processing unit. Thus, in several embodiments, the controller 130 may include suitable computer-readable instructions that, when implemented, configure the controller 130 to perform various different functions, such as receiving, transmitting and/or executing wind turbine control signals. Accordingly, the controller 130 may generally be configured to control the various operating modes (e.g., start-up or shut-down sequences), de-rating or up-rating the wind turbine, and/or individual components of the wind turbine 100.

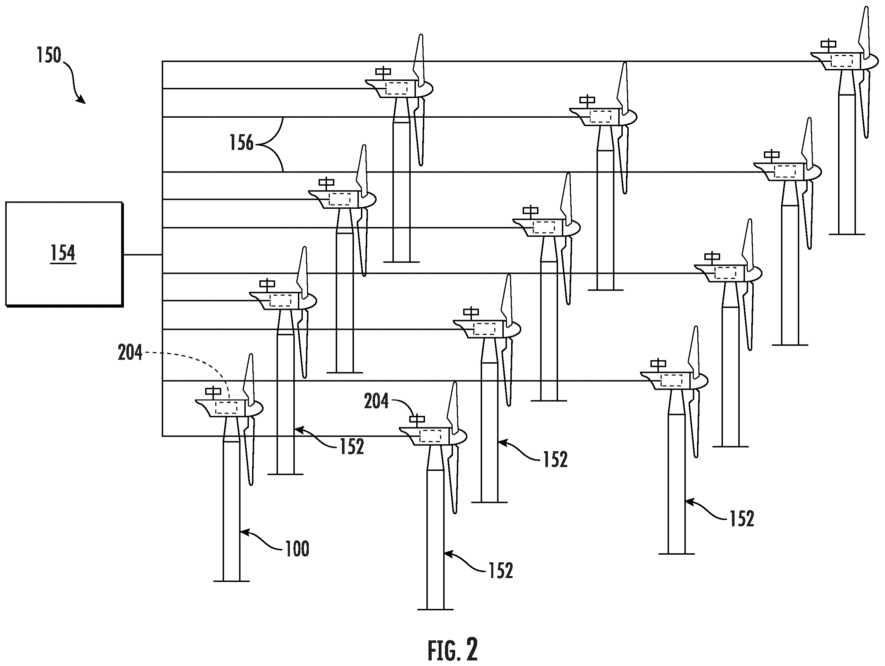

Referring now to FIG. 2, the wind turbine 100 described herein may be part of a wind farm 150 that is controlled according to the system and method of the present disclosure is illustrated. As shown, the wind farm 150 may include a plurality of wind turbines 152, including the wind turbine 100 described above, and a farm-level controller 154. For example, as shown in the illustrated embodiment, the wind farm 150 includes twelve wind turbines, including wind turbine 100. However, in other embodiments, the wind farm 150 may include any other number of wind turbines, such as less than twelve wind turbines or greater than twelve wind turbines. In one embodiment, the controller 130 of the wind turbine 100 may be communicatively coupled to the farm-level controller 154 through a wired connection, such as by connecting the controller 130 through suitable communicative links 156 or networks (e.g., a suitable cable). Alternatively, the controller 130 may be communicatively coupled to the farm-level controller 154 through a wireless connection, such as by using any suitable wireless communications protocol known in the art. In addition, the farm-level controller 154 may be generally configured similar to the controller 130 for each of the individual wind turbines 152 within the wind farm 150.

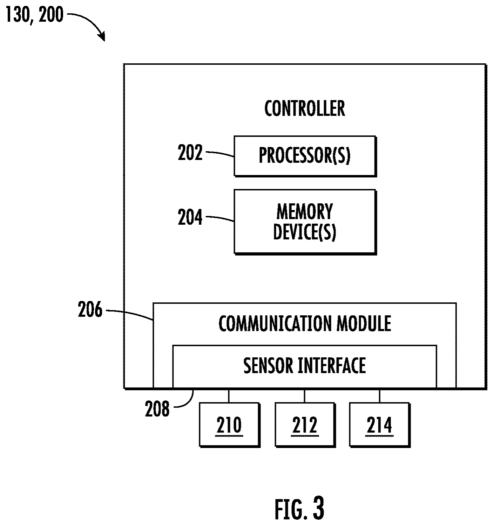

Referring now to FIG. 3, a block diagram of an embodiment of a controller 200 (e.g., such as the controller 130 and/or the farm-level controller 154 in accordance with aspects of the present disclosure is illustrated. As shown, the controller 200 may include one or more processor(s) 202 and associated memory device(s) 204 configured to perform a variety of computer-implemented functions (e.g., performing the methods, steps, calculations and the like and storing relevant data as disclosed herein). Additionally, the controller 200 may also include a communications module 206 to facilitate communications between the controller 200 and the various components of the wind farm 150. Further, the communications module 206 may include a sensor interface 208 (e.g., one or more analog-to-digital converters) to permit signals transmitted from one or more sensors 210, 212, 214 to be converted into signals that can be understood and processed by the processors 202. It should be appreciated that the sensors 210, 212, 214 may be communicatively coupled to the communications module 206 using any suitable means. For example, as shown, the sensors 210, 212, 214 are coupled to the sensor interface 208 via a wired connection. However, in other embodiments, the sensors 210, 212, 214 may be coupled to the sensor interface 208 via a wireless connection, such as by using any suitable wireless communications protocol known in the art.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 204 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 204 may generally be configured to store suitable computer-readable instructions that, when implemented by the processor(s) 252, configure the controller 200 to perform various functions as described herein.

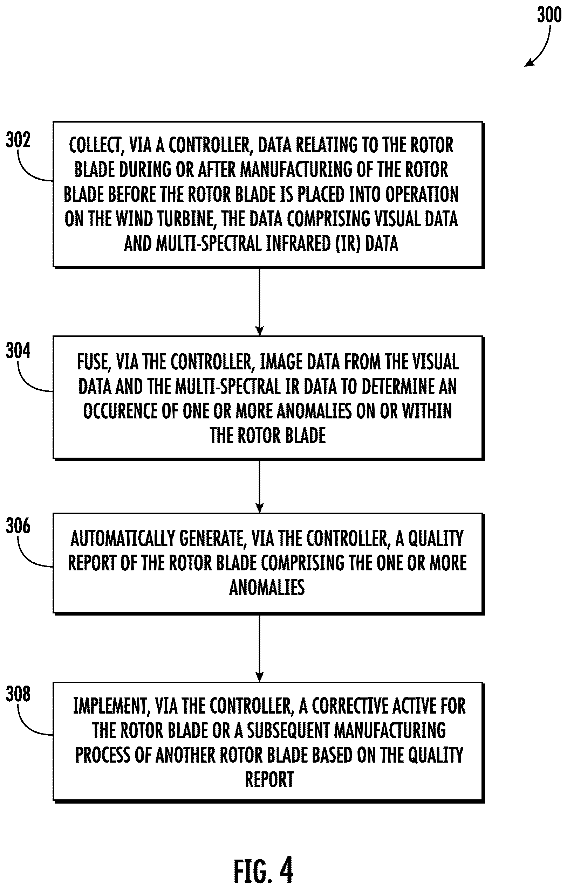

Referring now to FIG. 4, a flow diagram of one embodiment of a method 300 for improving quality of a rotor blade of a wind turbine during manufacturing according to the present disclosure is illustrated. In general, the method 300 will be described herein with reference to the wind turbine 100 described above with reference to FIGS. 1-3. However, it should be appreciated by those of ordinary skill in the art that the disclosed method 300 may generally be utilized with any wind turbine having any suitable configuration. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure. Moreover, in an embodiment, the method 300 may be performed by the controller 130, a separate controller, or via the cloud.

As shown at (302), the method 300 includes collecting, via a controller, data relating to the rotor blade 112. In an embodiment, the data relating to the rotor blade 112 is collected during or after manufacturing of the rotor blade 112 before the rotor blade 112 is placed into operation on the wind turbine 100. Further, the data includes visual data and multi-spectral infrared (IR) data. In such embodiments, for example, the visual data may include high resolution data, such as one or more 360° videos of the rotor blade, one or more 180° videos of the rotor blade, one or more 360° images of the rotor blade, one or more 180° images of the rotor blade, and/or Light Detection and Ranging (LIDAR) data, or similar.

Moreover, in an embodiment, the multi-spectral IR data may include near-infrared (NIR) data, short-wave infrared (SWIR) data, medium-wave infrared (MWIR) data, or thermal IR data. For example, in an embodiment, a wavelength of the NIR data may range from about 800 nanometers (nm) to about 1000 nm, whereas a wavelength of the SWIR data may range from about 1000 nanometers (nm) to about 2500 nm, and a wavelength of the MWIR data may range from about 2500 nanometers (nm) to about 7500 nm. Thus, in an embodiment, the NIR data may include multiple frames of two-dimensional (2D) NIR image data and the thermal IR data may include two-dimensional (2D) thermal IR data.

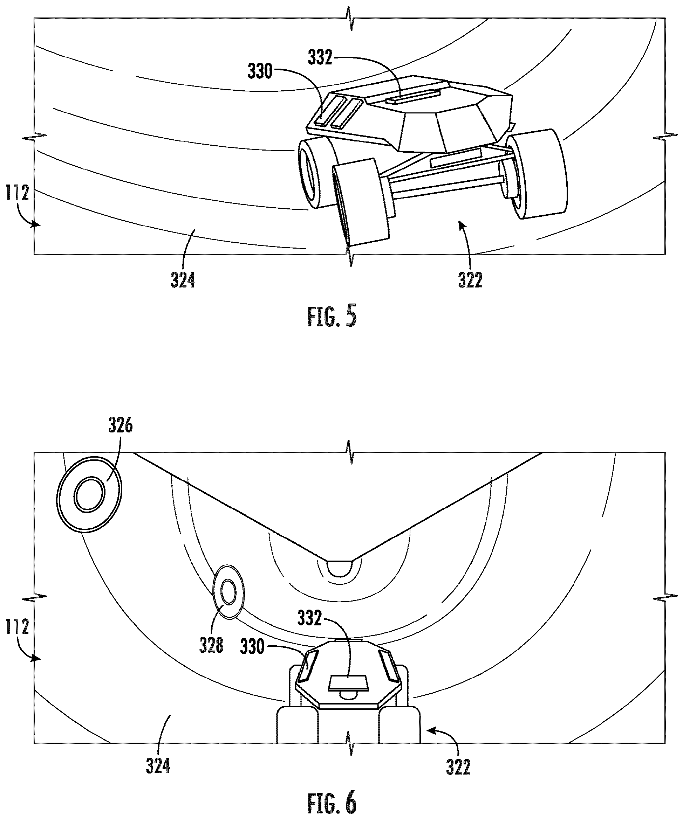

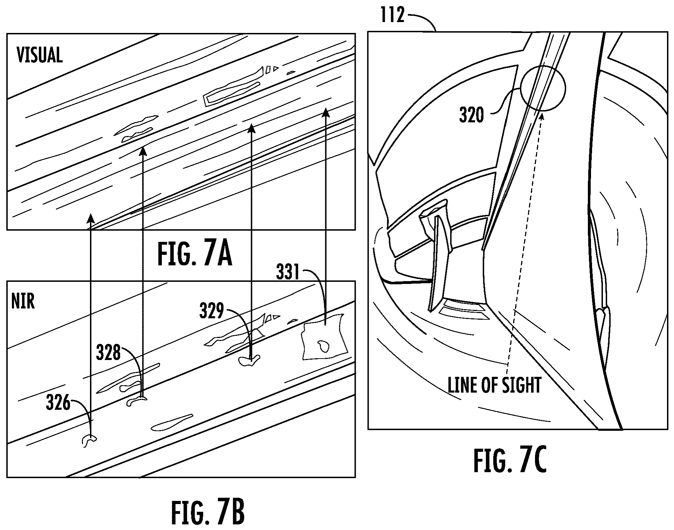

More specifically, as shown in FIGS. 5 and 6, the data relating to the rotor blade 112 described herein may be collected by operating an intelligent vehicle 322, such as a semiautonomous intelligent vehicle, across a surface 324 of the rotor blade 112. As an example, FIG. 7 illustrates various types of image data according to the present disclosure that may be collected by the intelligent vehicle 322. In particular, FIG. 7, as shown at (A), illustrates example visual data according to the present disclosure; FIG. 7, as shown at (B), illustrates example NIR image data according to the present disclosure; and FIG. 7, as shown at (C), illustrates an interior view of the rotor blade 112, particularly a location 320 of inspection for the visual and IR data as shown at (A and B) according to the present disclosure. Furthermore, as shown at (C), the image data may depict one or more anomalies 326, 328, 329, 331. The intelligent vehicle 322 described herein may include any suitable crawler, robot, drone, or similar capable of being automatically driven or otherwise controlled (such as via remote control, manually operated, etc.) across the surface of the rotor blade 112 and/or throughout an interior and/or exterior of the rotor blade 112 for collecting data relating to the rotor blade 112. Thus, in various embodiments, the intelligent vehicle 322 may include wheels, tracks, propellers, or similar, or combinations thereof. Moreover, as shown, the intelligent vehicle 322 may include a camera 330 and an IR source 332.

The method 300 may optionally include processing the data relating to the rotor blade 112, such as the image data relating to the anomalies 326, 328, 329, 331. For example, in an embodiment, processing the data relating to the rotor blade 112 may include extracting one or more images/pictures (as shown in FIG. 7) from one or more videos collected by the intelligent vehicle 322. Furthermore, the method 300 may include correlating the image(s) to an actual location on the rotor blade 112 using a model representation of the rotor blade 112. For example, in an embodiment, the method 300 may include generating the model representation of the rotor blade 112 using LIDAR. Thus, in an embodiment, LIDAR can be used to identify a position of one or more anomalies on the rotor blade 112.

Referring back to FIG. 4, as shown at (304), the method 300 includes fusing, via the controller, image data from the visual data and the multi-spectral IR data to determine an occurrence of one or more anomalies on or within the rotor blade 112. For example, in an embodiment, fusing the image data from the visual data and the multi-spectral IR data may include implementing a change detection algorithm on the image data from the visual data and the multi-spectral IR data to determine the occurrence of the of one or more anomalies on or within the rotor blade 112.

Moreover, in an embodiment, the method 300 may include fusing the 2D NIR data and the visual data together using one or more machine-learned models. The machine learned models described herein may include, for example, neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks, and/or other forms of neural networks. Some example machine-learned models can leverage an attention mechanism such as self-attention. For example, some example machine-learned models can include multi-headed self-attention models (e.g., transformer models). In another embodiment, the machine learning models described herein may include a rule-based approach, wherein actions are chosen based on a pre-determined set of if-then rules or mathematical expressions with pre-defined parameters.

Furthermore, in particular embodiments, the method 300 may include extracting 2D wavelet-based features from the 2D NIR image data and utilizing the 2D wavelet-based features to fuse images from the 2D NIR image data and the visual data together. In such embodiments, the 2D wavelet-based features may include, e.g., maximum, minimum, mean, or any suitable function thereof of the approximation coefficients and details coefficients of wavelet decomposition of the NIR and visual images.

In further embodiments, fusing the image data from the visual data and the multi-spectral IR data may include identifying one or more thermal features in the 2D thermal IR data, determining an amplitude spectrum and a phase spectrum of the 2D thermal IR data, and fusing the thermal feature(s), the amplitude spectrum, and the phase spectrum of the 2D thermal IR data with the 2D NIR image data and the visual data, thereby enabling enhanced sensitivity to deeper anomalies. In such embodiments, the thermal feature(s) may include local temperatures, a rate of thermal diffusion, effusivity, or similar.

Thus, and referring back to FIG. 4, as shown at (306), the method 300 further includes automatically generating, via the controller, a quality report of the rotor blade 112 that includes the anomaly(ies). For example, in such embodiments, the quality report may generally include a location, type, and/or criticality of the identified anomalies. Furthermore, in an embodiment, as shown at (308), the method 300 includes implementing, via the controller, a corrective action for the rotor blade 112 or a subsequent manufacturing process of another rotor blade based on the quality report. For example, in an embodiment, implementing the corrective action for the rotor blade or the subsequent manufacturing process of another rotor blade based on the quality report may include providing closed-loop feedback to an overlaminate repair process to modify one or more resin flow parameters based on the multi-spectral data, storing the quality report in a database, scheduling a repair to correct the identified one or more anomalies, modifying a manufacturing parameter, and/or halting production of subsequent rotor blades until the one or more anomalies are corrected.

Exemplary embodiments of a method and system for improving quality of a wind turbine rotor blade during manufacturing are described herein. The systems and methods of the present disclosure are not limited to the specific embodiments described herein, but rather, components of systems and/or steps of the methods may be utilized independently and separately from other components and/or steps described herein. For example, the methods may also be used in combination with other electronic systems and are not limited to practice with only the electronic systems, and methods as described herein. Rather, the exemplary embodiment can be implemented and utilized in connection with many other electronic systems.

Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are exemplary only, and thus are not intended to limit in any way the definition and/or meaning of the term processor and processing device. Furthermore, in an embodiment, the processing capability might be located at the wind turbine, at the wind farm, or in the cloud infrastructure.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

Further aspects of the invention are provided by the subject matter of the following clauses:
A method for improving quality of a rotor blade of a wind turbine, the method comprising: collecting, via a controller, data relating to the rotor blade during or after manufacturing of the rotor blade before the rotor blade is placed into operation on the wind turbine, the data comprising visual data and multi-spectral infrared (IR) data; fusing, via the controller, image data from the visual data and the multi-spectral IR data to determine an occurrence of one or more anomalies on or within the rotor blade; automatically generating, via the controller, a quality report of the rotor blade comprising the one or more anomalies; and implementing, via the controller, a corrective action for the rotor blade or a subsequent manufacturing process of another rotor blade based on the quality report.

The method of any preceding clause, wherein the multi-spectral IR data comprises at least one of near-infrared (NIR) data, short-wave infrared (SWIR) data, medium-wave infrared (MWIR) data, or thermal IR data.

The method of any preceding clause, wherein a wavelength of the NIR data ranges from about 800 nanometers (nm) to about 1000 nm, a wavelength of the SWIR data ranges from about 1000 nanometers (nm) to about 2500 nm, and a wavelength of the MWIR data ranges from about 2500 nanometers (nm) to about 7500 nm.

The method of any preceding clause, wherein the visual data comprises at least one of one or more 360° videos of the rotor blade, one or more 180° videos of the rotor blade, one or more 360° images of the rotor blade, one or more 180° images of the rotor blade, or Light Detection and Ranging (LIDAR) data.

The method of any preceding clause, further comprising operating an intelligent vehicle across a surface of the rotor blade to collect the data relating to the rotor blade, the intelligent vehicle comprising a camera and an IR source.

The method of any preceding clause, wherein the NIR data comprises multiple frames of two-dimensional (2D) NIR image data and the thermal IR data comprises two-dimensional (2D) thermal IR data.

The method of any preceding clause, wherein fusing the image data from the visual data and the multi-spectral IR data to determine the occurrence of one or more anomalies on or within the rotor blade further comprises fusing the 2D NIR data and the visual data using one or more machine-learned models.

The method of any preceding clause, wherein fusing the image data from the visual data and the multi-spectral IR data to determine the occurrence of one or more anomalies on or within the rotor blade further comprises: extracting 2D wavelet-based features from the 2D NIR image data; and utilizing the 2D wavelet-based features to fuse images from the 2D NIR image data and the visual data.

The method of any preceding clause, wherein the 2D wavelet-based features comprise at least one of a maximum, a minimum, or a mean of approximation coefficients and details coefficients of wavelet decomposition of the 2D NIR image data and the visual data.

The method of any preceding clause, wherein fusing the image data from the visual data and the multi-spectral IR data to determine the occurrence of one or more anomalies on or within the rotor blade further comprises: identifying one or more thermal features in the 2D thermal IR data; determining an amplitude spectrum and a phase spectrum of the 2D thermal IR data; and fusing the one or more thermal features, the amplitude spectrum, and the phase spectrum of the 2D thermal IR data with the 2D NIR image data and the visual data, thereby enabling enhanced sensitivity to deeper anomalies.

The method of any preceding clause, wherein the one or more thermal features comprise at least one of local temperatures, a rate of thermal diffusion, or effusivity.

The method of any preceding clause, wherein fusing the image data from the visual data and the multi-spectral IR data to determine the occurrence of one or more anomalies on or within the rotor blade further comprises: implementing a change detection algorithm on the image data from the visual data and the multi-spectral IR data to determine the occurrence of the of one or more anomalies on or within the rotor blade.

The method of any preceding clause, wherein implementing the corrective action for the rotor blade or the subsequent manufacturing process of another rotor blade based on the quality report further comprises providing closed-loop feedback to an overlaminate repair process to modify one or more resin flow parameters based on the multi-spectral data, storing the quality report in a database, scheduling a repair to correct the one or more anomalies, modifying a manufacturing parameter, or halting production of subsequent rotor blades until the one or more anomalies are corrected.

A system for improving quality of a rotor blade of a wind turbine, the system comprising: a controller comprising at least one processor configured to receive data relating to the rotor blade, the data relating to the rotor blade collected during or after manufacturing of the rotor blade before the rotor blade is placed into operation on the wind turbine, the data comprising visual data and multi-spectral infrared (IR) data, wherein the at least one processor is configured to perform a plurality of operations, the plurality of operations comprising: fusing image data from the visual data and the multi-spectral IR data to determine an occurrence of one or more anomalies on or within the rotor blade; automatically generating a quality report of the rotor blade comprising the one or more anomalies; and implementing a corrective action for the rotor blade or a subsequent manufacturing process of another rotor blade based on the quality report.

The system of any preceding clause, wherein the multi-spectral IR data comprises at least one of near-infrared (NIR) data, short-wave infrared (SWIR) data, medium-wave infrared (MWIR) data, or thermal IR data, and wherein the visual data comprises at least one of one or more 360° videos of the rotor blade, one or more 180° videos of the rotor blade, one or more 360° images of the rotor blade, one or more 180° images of the rotor blade, or Light Detection and Ranging (LIDAR) data.

The system of any preceding clause, wherein the plurality of operations further comprise operating an intelligent vehicle across a surface of the rotor blade to collect the data relating to the rotor blade, the intelligent vehicle comprising a camera and an IR source.

The system of any preceding clause, wherein the NIR data comprises multiple frames of two-dimensional (2D) NIR image data and the thermal IR data comprises two-dimensional (2D) thermal IR data, and wherein fusing the image data from the visual data and the multi-spectral IR data to determine the occurrence of one or more anomalies on or within the rotor blade further comprises fusing the 2D NIR data and the visual data using one or more machine-learned models.

The system of any preceding clause, wherein fusing the image data from the visual data and the multi-spectral IR data to determine the occurrence of one or more anomalies on or within the rotor blade further comprises: extracting 2D wavelet-based features from the 2D NIR image data, the 2D wavelet-based features comprising at least one of a maximum, a minimum, or a mean of approximation coefficients and details coefficients of wavelet decomposition of the 2D NIR image data and the visual data; and utilizing the 2D wavelet-based features to fuse images from the 2D NIR image data and the visual data.

The system of any preceding clause, wherein fusing the image data from the visual data and the multi-spectral IR data to determine the occurrence of one or more anomalies on or within the rotor blade further comprises: identifying one or more thermal features in the 2D thermal IR data, the one or more thermal features comprising at least one of a rate of thermal diffusion or a cooling rate; determining an amplitude spectrum and a phase spectrum of the 2D thermal IR data; and fusing the one or more thermal features, the amplitude spectrum, and the phase spectrum of the 2D thermal IR data with the 2D NIR image data and the visual data, thereby enabling enhanced sensitivity to deeper anomalies.

The system of any preceding clause, wherein implementing the corrective action for the rotor blade or the subsequent manufacturing process of another rotor blade based on the quality report further comprises providing closed-loop feedback to an overlaminate repair process to modify one or more resin flow parameters based on the multi-spectral data, storing the quality report in a database, scheduling a repair to correct the one or more anomalies, modifying a manufacturing parameter, or halting production of subsequent rotor blades until the one or more anomalies are corrected.

This written description uses examples to disclose the invention, including the best mode, and to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for improving quality of a rotor blade of a wind turbine, the method comprising:
collecting, via a controller, data relating to the rotor blade during or after manufacturing of the rotor blade before the rotor blade is placed into operation on the wind turbine, the data comprising visual data and multi-spectral infrared (IR) data;
fusing, via the controller, image data from the visual data and the multi-spectral IR data to determine an occurrence of one or more anomalies on or within the rotor blade;
automatically generating, via the controller, a quality report of the rotor blade comprising the one or more anomalies; and
implementing, via the controller, a corrective action for the rotor blade or a subsequent manufacturing process of another rotor blade based on the quality report.

2. The method of claim 1, wherein the multi-spectral IR data comprises at least one of near-infrared (NIR) data, short-wave infrared (SWIR) data, medium-wave infrared (MWIR) data, or thermal IR data.

3. The method of claim 2, wherein a wavelength of the NIR data ranges from about 800 nanometers (nm) to about 1000 nm, a wavelength of the SWIR data ranges from about 1000 nanometers (nm) to about 2500 nm, and a wavelength of the MWIR data ranges from about 2500 nanometers (nm) to about 7500 nm.

4. The method of any preceding claim, wherein the visual data comprises at least one of one or more 360° videos of the rotor blade, one or more 180° videos of the rotor blade, one or more 360° images of the rotor blade, one or more 180° images of the rotor blade, or Light Detection and Ranging (LIDAR) data.

5. The method of any preceding claim, further comprising operating an intelligent vehicle across a surface of the rotor blade to collect the data relating to the rotor blade, the intelligent vehicle comprising a camera and an IR source.

6. The method of any of the claims 2-5, wherein the NIR data comprises multiple frames of two-dimensional (2D) NIR image data and the thermal IR data comprises two-dimensional (2D) thermal IR data.

7. The method of claim 6, wherein fusing the image data from the visual data and the multi-spectral IR data to determine the occurrence of one or more anomalies on or within the rotor blade further comprises fusing the 2D NIR data and the visual data using one or more machine-learned models.

8. The method of claims 6 or 7, wherein fusing the image data from the visual data and the multi-spectral IR data to determine the occurrence of one or more anomalies on or within the rotor blade further comprises:
extracting 2D wavelet-based features from the 2D NIR image data; and
utilizing the 2D wavelet-based features to fuse images from the 2D NIR image data and the visual data.

9. The method of claim 8, wherein the 2D wavelet-based features comprise at least one of a maximum, a minimum, or a mean of approximation coefficients and details coefficients of wavelet decomposition of the 2D NIR image data and the visual data.

10. The method of any of the claims 2-9, wherein fusing the image data from the visual data and the multi-spectral IR data to determine the occurrence of one or more anomalies on or within the rotor blade further comprises:
identifying one or more thermal features in the 2D thermal IR data;
determining an amplitude spectrum and a phase spectrum of the 2D thermal IR data; and
fusing the one or more thermal features, the amplitude spectrum, and the phase spectrum of the 2D thermal IR data with the 2D NIR image data and the visual data, thereby enabling enhanced sensitivity to deeper anomalies.

11. The method of claim 10, wherein the one or more thermal features comprise at least one of local temperatures, a rate of thermal diffusion, or effusivity.

12. The method of any preceding claim, wherein fusing the image data from the visual data and the multi-spectral IR data to determine the occurrence of one or more anomalies on or within the rotor blade further comprises:
implementing a change detection algorithm on the image data from the visual data and the multi-spectral IR data to determine the occurrence of the of one or more anomalies on or within the rotor blade.

13. The method of any preceding claim, wherein implementing the corrective action for the rotor blade or the subsequent manufacturing process of another rotor blade based on the quality report further comprises providing closed-loop feedback to an overlaminate repair process to modify one or more resin flow parameters based on the multi-spectral data, storing the quality report in a database, scheduling a repair to correct the one or more anomalies, modifying a manufacturing parameter, or halting production of subsequent rotor blades until the one or more anomalies are corrected.

14. A system for improving quality of a rotor blade of a wind turbine, the system comprising:
a controller comprising at least one processor configured to receive data relating to the rotor blade, the data relating to the rotor blade collected during or after manufacturing of the rotor blade before the rotor blade is placed into operation on the wind turbine, the data comprising visual data and multi-spectral infrared (IR) data, wherein the at least one processor is configured to perform a plurality of operations, the plurality of operations comprising:
fusing image data from the visual data and the multi-spectral IR data to determine an occurrence of one or more anomalies on or within the rotor blade;
automatically generating a quality report of the rotor blade comprising the one or more anomalies; and
implementing a corrective action for the rotor blade or a subsequent manufacturing process of another rotor blade based on the quality report.

15. The system of claim 14, wherein the multi-spectral IR data comprises at least one of near-infrared (NIR) data, short-wave infrared (SWIR) data, medium-wave infrared (MWIR) data, or thermal IR data, and wherein the visual data comprises at least one of one or more 360° videos of the rotor blade, one or more 180° videos of the rotor blade, one or more 360° images of the rotor blade, one or more 180° images of the rotor blade, or Light Detection and Ranging (LIDAR) data.
